# EUROPÄISCHE PATENTSCHRIFT

(11) **EP 1 975 597 B1**
(45) Veröffentlichungstag und Bekanntmachung des Hinweises auf die Patenterteilung: **15.07.2020**
(21) Anmeldenummer: 08152972.9
(22) Anmeldetag: 19.03.2008
(51) Int. Cl.: G01N 11/04

(54) **Scherstress-Applikation**
Shearing stress application
Application d'une contrainte de cisaillement

(30) Priorität: 29.03.2007 DE 102007015136
(43) Veröffentlichungstag der Anmeldung: 01.10.2008
(73) Patentinhaber: Boehringer Ingelheim Pharma GmbH & Co. KG, 55216 Ingelheim am Rhein (DE)
(72) Erfinder: Heinzelmann, Udo, 55216 Ingelheim am Rhein (DE); Garidel, Patrick, 55216 Ingelheim am Rhein (DE); Kern, Hans-Joachim, 55216 Ingelheim am Rhein (DE); Langer, Andreas, 55216 Ingelheim am Rhein (DE); Weber, Jürgen, 55216 Ingelheim am Rhein (DE)
(74) Vertreter: Simon, Elke Anna Maria

(56) Entgegenhaltungen:
- WO-A1-2005/016442
- WO-A2-99/40771
- US-A- 4 752 131
- US-A1- 2005 213 427

## Beschreibung

### HINTERGRUND DER ERFINDUNG

### TECHNISCHES GEBIET

Die Erfindung betrifft eine Apparatur zur Simulation von Scherstress, der auf in Lösung dispergierte Teilchen wie z. B. Proteine ausgeübt wird. Die Erfindung betrifft weiterhin ein Verfahren zur Bestimmung des Scherstresses in den für die Abfüllung benötigten Komponenten (Filter, Füllnadel, Pumpe, Schläuche usw.) insbesondere bei der Abfüllung einer Flüssigkeit, welche dispergierte Teilchen enthält (Biomoleküle /Proteine /Makromoleküle). Die vorliegende Erfindung umfasst weiterhin den Einsatz einer Scher-Stress-Applikation (PSA) für die Simulation von Scherbeanspruchung in Prozess - und Abfüllanlagen für Lösungen mit hochmolekularen Bestandteilen (Proteine, DNA, Antikörper usw.).

### HINTERGRUND

Bei der aseptischen Herstellung werden in der Regel flüssige Produkte in so genannte Primärpackmittelsysteme abgefüllt.

Auf dem Weg vom hergestellten Produkt bis zum Primärpackmittel durchläuft das unter Umständen empfindliche Produkt zahlreiche abfüllungstechnische Prozesse wie z. B. Rühren, Sterilfiltrieren, Pumpen, Transportieren, Abfüllen usw.. Jeder dieser Prozesse beinhaltet zwangsläufig fluidische Strömungen bei denen Schergeschwindigkeiten auftreten. Diese Schergeschwindigkeiten stellen für die in der Lösung dispergierten Teilchen (z. B. Proteine) eine mechanische Scherbeanspruchung dar und können je nach Stärke und Produktstabilität zu Schädigungen oder sogar zur Zerstörung des abzufüllenden Produkts führen.

Es bestand somit die Aufgabe der Bereitstellung eines Verfahrens, das eine systematische, reproduzierbare Datenerhebung zur Korrelation zwischen Scherstress und Stabilität der in Lösung dispergierten Teilchen erlaubt.

Um nun die Auswirkungen der jeweiligen Abfüllprozesse bzw. des gesamten Prozesses auf die Produktstabilität- und Qualität zu bestimmen, wurde die Scher-Stress-Applikation entwickelt und eingesetzt (z.B. zur Prozessabsicherung). Zudem ist es mit Hilfe der Applikation möglich, Aussagen über die Produktempfindlichkeit im wässerigen System zu machen, um die Findung geeigneter Formulierungen zu unterstützen.

US2005/213427 beschreibt eine Mischvorrichtung zur Herstellung von Schaum-Emulsionen bzw. zur Bestimmung von rheologischen Parametern wie der Viskosität. Die Apparatur umfasst zwei Spritzen, welche mittels eines Kapillarröhrchens verbunden sind, die auch Emulsifikationsnadel genannt wird.

WO99/40771 beschreibt eine Methode zur Herstellung von gentherapeutischen Zusammensetzungen mit zwei oder mehr molekularen Komponenten und beschreibt primär Mischungsvorgänge.

### ZUSAMMENFASSUNG DER ERFINDUNG

Die beschriebene Apparatur stellt das technische Mittel zur Lösung des Problems dar.

Die vorliegende Erfindung betrifft eine Vorrichtung zur Ermittlung der Scherstressbelastung eines in Lösung dispergierten Teilchens, wobei das Teilchen im pharmazeutischen Bereich verwendet wird, durch Messung der Teilchenaggregation/ Teilchenzestörung, bestehend aus mindestens folgenden Teilen:
a) einer mechanischen Aufnahme (F),
b) zwei komplementäre zylindrische Körper (C), die im Bereich ihres jeweiligen Auslasses konisch geformt sind,
c) wobei die Auslässe über eine Kanüle (D) verbunden sind,
d) zwei Kolbenstangen (B), passend in die Körper aus b), wobei jede Kolbenstange (B) eine Fingerauflage enthält,
e) zwei auf die Fingerauflagen der Kolbenstangen zugestellten Arretierungshalter (G), welche eine feste Positionierung der Kolbenstangen bewirken,
f) einem Antrieb (I), um die zylindrischen Körper auf- und abzubewegen, für ihre jeweilige Entleerung und Befüllung über die Kanüle,
g) eine digitale Antrieb-Ansteuerungseinheit (J),
wobei die besagte Vorrichtung gekennzeichnet ist durch
i) ein integriertes optisches Messsystem zur Messung der Teilchenaggregation/Teilchenzerstörung, wobei
ii) die zwei komplementären zylindrischen Körper (C) in b) Ganzglaskörper sind, und
iii) die Verbindung in c) über eine Kanüle (D) mit Luer-Lock Anschlüssen (H) erfolgt,
wobei die Ganzglas-Körper und die Kanüle mit der mechanischen Aufnahme verbunden sind.

In der vorliegenden Erfindung wurde die Idee für ein Verfahren entwickelt und verwirklicht, um definierte Schergeschwindigkeit und Dauer der Beanspruchung für Lösungen mit hochmolekularen Bestandteilen (Proteine, DNA, Antikörper usw.) so einstellen zu können, wie sie im großtechnischen Maßstab bei Prozess- und Abfüllanlagen auftreten.

Die Einhaltung von Kriterien wie geringer Probenbedarf und optimale Prozessnähe (Verwendung identischer Materialien) werden durch die Verwendung zweier Komplementär-Spritzen, die durch eine definierte Kanüle miteinander verbunden sind, ermöglicht. Die Auswirkungen des Stresses auf z. B. Proteine werden analytisch quantifiziert, z. B. durch PCS- oder Trübungsmessungen.

Die Erfindung betrifft die Entwicklung und den Einsatz der Scher-Stress-Applikation (PSA) Apparatur für die Quantifizierung der Auswirkungen von unterschiedlichen Formulierungen auf die Proteinstabilitat bei frei wählbaren Parametern wie Schergeschwindigkeit und Dauer der Proteinbeanspruchung (Anwendungsbeispiel: Antikörper IgG1).

Die Stärke des Scherstresses und die Dauer der Beanspruchung bewirken eine Veränderung der Teilchengröße (z. B. Proteinaggregation oder -Teilung). Das Maß der Proteinaggregation ("Proteindegradation) nimmt mit der Stärke der Belastung zu. Dieser Effekt ist durch die PSA reproduzierbar und erlaubt dadurch den Vergleich z. B. der Proteinstabilitaten von verschiedenen Formulierungen. Die Auswirkungen der Scherbeanspruchung auf die Makromolekule (z. B. Proteinaggregation) werden analytisch quantifiziert, z. B. durch PCS- oder Trübungsmessungen.

Die Erfindung betrifft weiterhin die Entwicklung und den Einsatz der Scher-Stress-Applikation (PSA) für die Bestimmung des Verhaltens der Molekülstabilitat (z. B. Proteinaggregation) durch definierte Schergeschwindigkeiten und Dauer der Beanspruchung. Belastungskurven zeigen auf, wie stark die Proteinqualität von der Scherbelastung oder von der Scherdauer abhängt. Die gewonnen Daten werden verwendet, um Aussagen über die Empfindlichkeit der Proteine treffen zu können. Die Auswirkung des Stresses auf die Moleküle (z. B. Proteinaggregation) wird analytisch quantifiziert, z. B. durch PCS- oder Trübungsmessungen.

Die Erfindung beinhaltet weiterhin die Entwicklung und den Einsatz der Scher-Stress-Applikation (PSA) für Tests von Filtern bezüglich ihrer Auswirkung auf die Proteinqualität durch Scherbeanspruchung bei definierten Volumenströmen. Die Auswirkung der Scherbeanspruchung auf die Moleküle (z. B. Proteinaggregation) wird analytisch quantifiziert, z. B. durch PCS- oder Trübungsmessungen.

Die Erfindung betrifft des Weiteren die Entwicklung und den Einsatz der Scher-Stress-Applikation (PSA) für die Vergleichbarkeit von Neigung zur Schaumbildung verschiedener Proteinlösungen.

Eine zum Teil mit Luft gefüllte PSA-Spritze bewirkt, dass sich die wässerige Proteinlösung mit der Luft vermischt und während der Applikation Schaum bildet. Die Intensität der Schaumbildung ist von der Schergeschwindigkeit abhängig und erlaubt somit den quantitativen Vergleich verschiedener Lösungen.

Die PSA enthält ein integriertes optisches Messsystem, um Trübungs- und Konzentrationsmessungen online durchführen zu können.

Die Funktionsweise der vorliegenden Erfindung ist wie folgt:
Zwei Ganzglasspritzen (2-20 ml Volumen) werden nach dem Befüllen mit der zu testenden Lösung durch eine speziell präparierte Kanüle mit Luer-Lock Anschlüssen miteinander luftarm verbunden. Die Spritzen werden dann in die Apparatur (PSA) implementiert, wobei die Spritzenkörper und Kanüle mit dem System verbunden sind. Zwei auf die Fingerauflagen der Spritzen-Kolbenstangen zugestellten Arretierungshalter bewirken eine feste Positionierung der Kolbenstangen und somit bei der elektromechanisch angetriebenen Auf- und Abbewegung der Spritzenkörper das jeweilige Entleeren und Befüllen der Spritzenkörper über die Kanüle. Eine speziell entwickelte Software ermöglicht die Einstellungen der Parameter Hub-Geschwindigkeit und Anzahl der Wiederholungen und erlaubt dadurch definierte Abläufe. Die Einstellung einer definierten Scherbeanspruchung erfolgt über die Abhängigkeit der Scherbeanspruchung vom Kanülendurchmesser und Geschwindigkeit im strömenden wässrigen Fluids.

Bei der PSA können Scherraten von 0 bis ca. 200 000 1/s (laminar/turbulent) sowie eine in weitem Bereich wählbare Scherdauer eingestellt werden, wobei die Scherdauer einer fiktiven Kanülenlange entspricht. Hierbei werden die molekularen Partikel durch die unterschiedlichen Fließgeschwindigkeiten des Mediums in der Kanüle gemäß der eingestellten Schergeschwindigkeit mechanisch belastet. Je schneller ein Fluid durch eine Kanüle strömt, desto größer ist die Scherbeanspruchung auf die molekularen Partikel bzw. auf in Lösung dispergierte Teilchen.

Der Zweck und die Wirkung der PSA Apparatur ist es, Moleküle (z. B. Proteine) in Lösung mechanisch so zu beanspruchen, dass sich die Aggregatbildung der Moleküle (Konformitätsänderung) aufgrund der Scherbelastung messbar ändert, um damit zu ermöglichen, das Stabilitätsverhalten der Moleküle hinsichtlich mechanischer Beanspruchung mittels analytischer Verfahren wie z. B. PCS- oder Trübungsmessungen zu bestimmen.

Der besondere Vorteil der eingesetzten Ganzglaskörper (z.B. Ganzglasspritzen) ist es, dass diese ohne Zusatz- Materialien auskommen. Die Körper/Spritzen sind auch ohne solche Zusatz-Materialien "dicht" und haben durch die Flüssigkeitsbenetzung von Kolbenstange und zylindrischem Körper einen sehr geringen Haft- und Gleitreibungswert. Zudem werden viele medizinische Produkte in Glasbehältnissen tranportiert und gelagert. Daher ist die Verwendung von Ganzglas-Körpern bei der erfindungsgemäßen Vorrichtung besonders produktionsnah und damit vorteilhaft. Kunstoffspritzen besitzen meist Gummi für ihre Dichtheit. Dieser ist meistens noch zusätzlich silikonisiert, um die Reibungskräfte gering zu halten. Die Wechselwirkungen zwischen Proteinen und den synthetischen Stoffen oder Silikonschmierungen ist nicht vollständig bekannt und birgt Risiken. Hierbei werden als nachteilige Komponenten insbesondere "extractables" und "leachables" stark diskutiert. Zudem kann die PSA alternierend arbeiten wohingegen Kunststoffkörper (-spritzen) für solche Vorgänge nicht konzipiert sind. Beim Einsatz von Kunststoffkörpern kann sich die Beschichtung ablösen oder Silikon-Öl in Lösung gehen.

Weiterhin ist für die Erfindung vorteilhaft bzw. essentiell, dass die Auf- und Abbewegung über die Bewegung der zylindrischen Ganzglas-Körper ausgeführt wird.

Die besondere Vorteile liegen weiterhin in
a) absoluter Prozessnähe zu Prozess- und Abfüllanlagen (Verwendung identischer Materialien)
b) Verbrauch geringer Probenvolumina (1-20 ml)
c) Durchführung von Stabilitätsstudien bezüglich Scherbelastung und -dauer
d) Vielseitige Anwendbarkeit, z. B. für
   - Stabilitatstest von Makromolekiilen
   - Erzeugung definierter Schaumbildung
   - Filtertests
   - Formulierungsfindung
   - Bestimmung von in Abfüllanlagen herrschenden Schergefällen
   - Simulation von Abfüllanlagen

Anwendungsmöglichkeiten der vorliegenden Erfindung ergeben sich insbesondere für die
- Prozessabsicherung von Flüssigprodukten (Parenteralias)
- Formulierungsfindung

Die Erfindung ergibt sich nicht aus dem Stand der Technik. Folgende herkömmliche Verfahren bzw. Apparaturen sind bekannt:
Das Dokument "The Effect of Membrane Filtration Upon Portein Conformation" (George A. Truskey et. al.) beschreibt die Auswirkungen der Schergeschwindigkeit in Membranporen auf die Proteinkonformität.
Das Dokument "Do Protein Molecules Unfold in a Simply Shear Flow" (Juan Japse et. al.) beschreibt die Auswirkungen der Schergeschwindigkeit in einer Kapillare auf die Proteinkonformität mittels Fluoreszenzspektroskopy.
Das Dokument "Effect of High Shear on Proteins" (Yuh-Fun Maa et. al.) beschreibt die Auswirkung von Schergefälle auf die Proteinaggregation.
Das Dokument "Shear effects on enzymes" (Stanley E. Charm et. al.) beschreibt die Auswirkung von Schergeschwindigkeit auf die Enzymkonformation.

Stand der Technik ist eine Flüssigkeit mit Schergeschwindigkeit auf unterschiedliche Weise zu erzeugen. Hierzu dienen oftmals Rotationskörper in denen die Flüssigkeit beschleunigt wird oder Kapillare durch die mittels einer Pumpe oder durch Druck die zu vermessende Lösung gepresst wird. Nachteile dieser Vorgehensweisen liegen auf der Hand. Rotationsgetriebene Flüssigkeiten neigen zur Sedimentierung, d. h., die in der Lösung dispergierten Teilchen konzentrieren sich lokal auf. Es ist hierbei nicht auszuschließen, dass Löslichkeitsgrenzen erreicht werden und es aufgrund dessen zu Ausfällungen von Proteinen kommt. Zudem verändert eine Aufkonzentrierung das viskose Verhalten der Flüssigkeit und führt somit zu unbestimmbaren Messvariablen. Die Techniken mit dem Einsatz einer Kapillaren führen beim Einsatz von Pumpen oder Druck (meist Stickstoff) zu einem Batchbetrieb und erlauben demnach nicht die freie Variation der Scherdauer. Zudem ist der Einsatz einer Pumpe fragwürdig da sie ja selbst Scherstress auf die Testlösung ausübt.

### BESCHREIBUNG DER ABBILDUNGEN

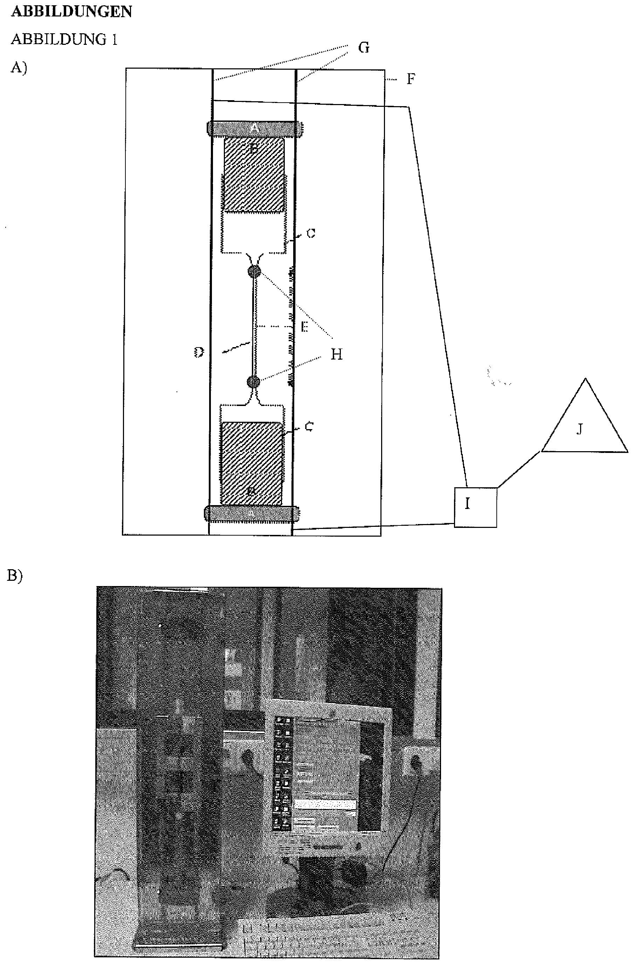

### ABBILDUNG 1: SCHEMATISCHE DARSTELLUNG APPARATUR

### A) Schematik der Protein-Scherstress-Applikation (PSA)

### Beschreibung der Schematik:

A: Arretierungsanschlag
B: Kolbenstangen (z.B. Spritzenkolben)
C: zylindrische Ganzglaskörper (z.B. Ganzglasspritzen)
D: Kanüle/ Kanülenrohr
E: Verfahrensweg von Kanülenrohr und Spritzenzylinder: Auf/Ab
F: mechanische Aufnahme
G: Arretierungshalter
H: Luer-Lock Anschlüsse
I: Antrieb
J: digitale Ansteuerungseinheit
und B) Foto der PSA
ABBILDUNG 2 (DIAGRAMM 1)
   Einfluss Variation der Scherdauer (Anzahl der Zyklen) bei konstanter Scherrate von 4800 1/s
ABBILDUNG 3: (DIAGRAMM 2).
   Einfluss Variation der Scherdauer (Anzahl der Zyklen) bei konstanter Scherrate von 64000 1/s
ABBILDUNG 4: (DIAGRAMM 3)
   Einfluss Variation der Scherrate bei konstanter Zyklenzahl von 100 → Zunahme Trübung und Partikelgröße bei Zunahme der Scherrate
ABBILDUNG 5: (DIAGRAMM 4)
   Wiederholungsmessung Trübung am Tag 2 mit konstantem Scherraten-Parameter (28000 1/s) → hohe Reproduzierbarkeit

### DETAILLIERTE BESCHREIBUNG DER ERFINDUNG

Die Scherstress-Applikation verfolgt im Grunde zwei Hauptziele:
Zum einen die Simulation von Stress auf Proteine wie er im Prozess des Abfüllens von wässrigen Protein-Lösungen in Abfüllnadeln herrscht. Obere Prämisse sind hierbei hohe Prozessnähe, geringer Probenbedarf, Verwendung von für Proteine inerte Materialien (Glas, Edelstahl) und Benutzerunabhängigkeit.
Zum anderen die Erzeugung von definiertem Scherstress für die Beurteilung und den Vergleich von Proteinstabilitäten für die Formulierungsentwicklung von wässerigen Proteinlösungen. Das oberste Ziel ist dabei reproduzierbare Bedingungen zu schaffen, um Proteine zu denaturieren.

Die mechanische Beanspruchung der Teilchen in wässeriger Lösung basiert auf Strömungseffekte die in jeder Rohrströmung auftreten. Die Strömungsgeschwindigkeit des Mediums ist an der Wandfläche gleicht null, wobei in der Mitte die maximale Geschwindigkeit auftritt. Das Geschwindigkeitsprofil einer laminaren Strömung in einem Rohr (Kanüle) ist parabolisch. Wird die parabolische mathematische Funktion der Strömung abgeleitet so resultiert im Mittel daraus die Schergeschwindigkeit γ (Gamma Punkt) der Strömung. Die Schergeschwindigkeit ist dem Volumenstrom proportional und umgekehrt proportional zur dritten Potenz des charakteristischen Rohrdurchmessers. Dieser Zusammenhang nutzt die Applikation aus der Kenntnis des benutzten Kanülendurchmessers und des konstant einstellbaren Volumenstroms.

Die Apparatur besteht im Wesentlichen aus drei Grundbausteinen:
- Konstruktive Aufnahme für die Komplementär-Spritzen mit Luer-Lock Anschluss für den Spritzengrößen von 2mL bis 20mL und Standgehäuse mit personeller Sicherheitsschutzeinrichtung,
- Elektromechanischer Antrieb (Schrittmotor) des Hubzapfens für die Ansteuerung der Spritzenzylinder,
- Digitale Schrittmotor-Ansteuerungseinheit und PC-Software

Die Protein-Scherstress-Applikation beinhaltet in erster Linie ein Verfahren das es ermöglicht, die in einer wässerigen Lösung dispergierte Teilchen mit Hilfe der volumenstrom-abhängigen Schergeschwindigkeit in einer Kanüle mechanisch reproduzierbar zu beanspruchen. Durch die Anordnung zweier komplementär arbeitenden Ganzglasspritzen, in denen die zu testende Flüssigkeit pro Arbeits-Zyklus einmal ausgetauscht wird, ist es theoretisch möglich die Testlösung unbegrenzt lange zu stressen ohne zusätzliches Probenmaterial zu verbrauchen. Das Verfahren kommt mit nur bis zu 1,5 mL Probenmaterial aus. Um die Schergeschwindigkeit mit der physikalisch gekoppelten Scherbelastung viskositäts-unabhängig je nach Parametrisierung konstant zu halten, ist die Hubbewegung nicht über die einwirkende Kraft sondern über den Volumenstrom gesteuert der sich aus der Hubgeschwindigkeit ergibt.

Die Applikation weist eine hohe Prozessnähe aus zweierlei Hinsichten auf. Zum einen durch die Verwendung von nur zwei pharmazeutisch- und medizinisch unbedenklichen Materialien wie Glas und Edelstahl. Zum anderen durch die Verwendung von originalen Füllnadeln wie sie bei Abfüllprozessen verwendet werden.

Die in der Applikation eingesetzten Kanülen (Originalfüllnadel mit unterschiedlichen Durchmessern) besitzen an den Enden jeweils einen Luer-Lock-Anschluss der speziell mit Hilfe eines LASER-Schweißverfahrens flüssigkeitsdicht angeschweißt wurde. Dieses Schweißverfahren erlaubt die Fertigung eines trichterförmigen Einlaufs der schließlich die Testlösung möglichst ohne Turbulenzen von der Spritze in die Kanüle überleitet. Der Luer-Lock-Anschluss erlaubt die Aufnahme von Spritzen mit entsprechendem Gegenanschluss und ist somit kompatibel zu verschiedenen Spritzengrößen. Die Befüllung der Spritzen geschieht applikationsunabhängig und kann bequem am Labortisch stattfinden. Durch die Zuhilfenahme einer Arretierung (z. B. Stativ) für eine Spritze können bei Bedarf die Spritzen luftlos miteinander durch das Kanülenrohr gekoppelt werden.

Die Wirkung der PSA ist es, in Lösung dispergierte Teilchen (z. B. Makromoleküle / Proteine) durch die Scherstress-Applikation mechanisch reproduzierbar und in einem großen Stressbereich zu belasten. Zweck ist es hierbei u. a. Schergeschwindigkeiten zu simulieren wie sie in Abfüllprozessen vorkommen (Pumpen, Schläuche, Filter, Füllnadeln usw.), um die Prozessfähigkeit des Produkts mit reduziertem Volumen zu testen (Prozessabsicherung). Zudem kann auch die Qualität der Formulierung anhand der Proteinstabilität getestet werden (Formulierungsfindung).

Der besondere Vorteil bei der Verwendung der Scherstress-Applikation liegt in der Möglichkeit, mit kleinsten Probenvolumen die gesamte Bandbreite des in der Abfüllung auftretenden Stresses prozessnah zu simulieren und zudem zweckdienliche Aussagen über die Proteinstabilität zur Findung einer geeigneten Formulierung machen zu können.

Im Rahmen dieser Erfindungsbeschreibung verwendete Begriffe und Bezeichnungen haben folgende im Anschluss definierte Bedeutungen. Die allgemeinen Ausführungsformen "enthaltend" oder "enthält" schließen die speziellere Ausführungsformen "bestehend aus" mit ein. Ferner werden "Einzahl" und "Mehrzahl" nicht begrenzend verwendet.

Die Begriffe "Vorrichtung", "PSA", "Apparatur", "Scherstressapparatur", "Scherstressapplikation" sind gleichbedeutend. "PSA" steht für "Protein-Scherstress-Applikation".

Der Begriff "dispergierte Teilchen" steht für in einer fluiden Phase, bevorzugt in einer wässerigen Lösung, homogen verteilte Teilchen, wobei deren Größe bevorzugt im Nanometerbereich liegt. Diese Teilchen können z.B. Proteine, Desoxyribonukleinsäure (DNA) oder andere Makromoleküle sein.

Die disperse Phase lässt sich allgemein nach ihrer Teilchengröße wie folgt einteilen:
- molekular dispers gelöst für Teilchengröße < 1 nm wie z.B. bei echten Lösungen / in fluiden Phasen,
- kolloid dispers gelöst für Teilchengrößen 1 nm bis 1 µm z.B. bei Proteinlösungen,
- grob dispers gelöst für Teilchengrößen > 1 µm z.B. bei Milchfettkügelchen.

Sind die in einer Lösung dispergierten Teilchen alle von derselben Größe, spricht man von einem monodispersen System. Im Rahmen der in der vorliegenden Erfindung verwendeten Systemen herrscht zu Beginn des Experiments im günstigsten Fall ein monodisperses Gemisch aus Teilchen (z.B. Proteinen, DNA, etc.). Proteine können eine Größe von ca. bis zu 3600 kDa erreichen. Ein Antikörper der Klasse G hat im allgemeinen ein Größe von ca. 11 nm hydrodynamischen Durchmesser. Je nach Konformität erreicht ein DNA-Strang mehr als 1 µm Länge. Die Größe ist daher geometrisch relativ.

Durch die Scherstress-Simulation wird durch die Konformationsänderung die Aggregatbildung gefördert, wobei dann in der Regel von einem kolloid dispersen System gesprochen werden kann mit polydispersem Charakter.

Der Begriff "Abfüllung" steht für einen gesamtheitlichen Prozess, der alle Teilschritte ab der Anlieferung eines Produkts bis zur verpackten Einheit beinhaltet. Hierzu gehören zur pharmazeutischen Flüssigabfüllung z. B. die Teilschritte Filtration und Füllung der Vials mittels Füllnadel.

Der Begriff "Scherstress" meint durch das fluidische Geschwindigkeitsgefälle einer Strömung in einer Rohrleitung hervorgerufene mechanische Belastung (Stress) auf die in der Lösung dispergierten Teilchen.

Die "definierte Kanüle" besteht aus drei Teilen. Ein für den medizinischen Einsatz taugliches Kanülenrohr mit 120 mm Länge, zwei genormte Luer-Lock Anschlüsse (weiblich) die jeweils an den Enden der Kanüle durch LASER-Schweißverfahren verschweißt sind. Der 6%-ige Kegel (Luer) in Verbindung der eingesetzten Schweißtechnik bildet einen fluidtechnisch günstigen Übergang vom Luer zum Kanülenrohr-Innendurchmesser. Bevorzugt werden drei verschiedene Innendurchmesser (ID) verwendet: ID = 0,6 mm, 1 mm und 2 mm. Das System eignet sich dadurch zur Kopplung zweier Spritzen mit Luer-Lock Anschlüssen (männlich).

"Luer-Lock" ist ein genormtes Verbindungssystem für Kanülen, Spritzen und Infusions-Schläuche im medizinischen Bereich.

Die Dichtung wird hierbei durch eine kegelförmige Konstruktion der Verbindungsteile, des sogenannten Luer-Konus, erreicht. Dabei wird der Innenkegel der einen Verbindungsseite auch als "weiblich" bezeichnet, der Außenkegel der Gegenseite als "männlich". Wenn der Konus zur Sicherung bzw. Verriegelung der Verbindung gegen versehentliches Lösen durch ein Gewinde mit Überwurfmutter erweitert ist, bezeichnet man das System als Luer-Lock. Die Verbindung schließt und öffnet mit einer halben Drehung. Das Luer-Lock-System garantiert die Kompatibilität zwischen verschiedenen Herstellern und ist international anerkannt. Die Konstruktion ist in der Norm DIN EN 1707:1996 "Kegelverbindungen mit einem 6 % (Luer) Kegel für Spritzen, Kanülen und bestimmte andere medizinische Geräte - Verriegelbare Kegelverbindungen" bzw. der Norm DIN EN 20594-1:1993 "Kegelverbindungen mit einem 6% (Luer) Kegel für Spritzen, Kanülen und bestimmte andere medizinische Geräte" beschrieben. Die Bezeichnung "Luer" geht auf den deutschen, aber in Paris wirkenden Instrumentenmacher Hermann Wülfing Luer († 1883 in Paris) zurück.

"Vial" meint Injektionsflasche bzw. Durchstichsflasche.

Unter "Schaumbildung" versteht sich die Neigung einer Flüssigkeit zur Schäumung durch Einschluss von Gas.

Der Begriff "Stabilität", insbesondere "Proteinstabilität" meint die Wiederstandskraft des Proteins für seine Unversehrtheit bzgl. seiner Funktionalität oder Konformität gegen äußere Einflüsse wie z. B. Ionenstärke oder mechanische Krafteinwirkung.

"Proteine" sind Makromeleküle und gehören zu den Grundbausteinen aller Zellen. Menschliche Proteine können eine Größe von bis zu 3600 kDa haben.

"PCS" steht für Photon Correlation Spectroscopy und ermöglicht die Bestimmung der hydrodynamischen Größe von in wässriger Lösung dispergierten Teilchen. der Messbereich erstreckt sich von 1 nm bis hin zu mehreren µm.

Die "Trübungsmessung" ist ein Verfahren, das die Streulichtintensität -verursacht von in Lösung dispergierten Teilchen - eines durch die Lösung durchdringenden Lichtstrahls misst. Eine Veränderung der sensiblen Streulichtintensität ist direkt proportional mit der Veränderung der Teilchengröße und deren Anzahl in der Lösung.

Der Begriff "komplementäre zylindrische Ganzglas-Körper" meint Körper im Sinne von Gefäßen, die im Bereich des Auslasses konisch geformt sind. Es darf keine scharfe Abrisskante vorhanden sein (insbesondere in Bezug auf Strömung). Bevorzugtes Beispiel eines solchen Körpers ist die Spritze. Besonders bevorzugtes Spritzenmodel ist die FORTUNA® OPTIMA® Ganzglasspritze (Ausführungen: 2, 5, 10 und 20 mL) vom Hersteller: Poulten & Graf GmbH, Am Bildacker 3-7, 97877 Wertheim.

Der Begriff "komplementäre" bzw. "Komplementär-Spritzen" meint, dass sich die zwei Körper bzw. Spritzen zu ihrem Nutzen ergänzen und zwar alternierend als Aufnahmebehältnis und Entnahmebehältnis.

Die "Schergeschwindigkeit" ist ein gemitteltes Maß für das geometrische Verhältnis von Länge und Breite eines beschriebenen Volumenelementes des laminaren Flüssigkeitsstromes. Die Einheit ist s⁻¹ und somit eine Geschwindigkeitsangabe. Der Absolutwert ist proportional zur Scherbelastung.

Die "Scherbelastung" ist identisch zum "Scherstress".

### BEISPIELE

Die nachstehenden Daten werden generiert indem z. B. eine Proteinlösung durch eine Kanüle mit einer fiktiven Länge von 12 m (entspricht 100 Zyklen) bei unterschiedlichen Schergeschwindigkeiten (Protein-Belastungsgrad) gedrückt und danach die Trübung der gestressten Protein-Lösung gemessen (Nephelometrie, Einheit FNU) wird.

Bei den nachfolgenden Versuchen werden Scherraten von 0 bis 64 000 1/s und verschiedene Zyklenanzahlen simuliert. Die Variation der Zyklenzahl entspricht einer entsprechenden Kanülenlänge. 1 Zyklus bedeuten 12 cm Kanülenlänge, 100 Zyklen bedeuten 12 m Kanülenlänge. Zudem wird untersucht, ob ein Lufteinschluss bei der Befüllung der Spritzen signifikante Auswirkungen (Grenzflächeneffekte) auf die Proteine hat mit dem Ergebnis, dass keine signifikante Unterschiede erkennbar sind.

### BEISPIEL 1:

Die Apparatur bestehend aus zwei Ganzglasspritzen, Kanülenrohr und mechanischem Aufbau für die Spritzenbewegung (siehe Abbildung 1) wird für zwei unterschiedliche Proteinformulierungen eingesetzt, um die Abhängigkeit der Proteinaggregation/- Degradation von der auf die Proteine einwirkenden Scherstressdauer aufzuzeigen. Eine speziell entwickelte Software (Softwarecode: {81566AFO-A9CD-4EFD-A1E1-F07AF6DD2507}) ermöglicht die Einstellungen der Parameter Hub-Geschwindigkeit und Anzahl der Wiederholungen und erlaubt dadurch definierte Abläufe.

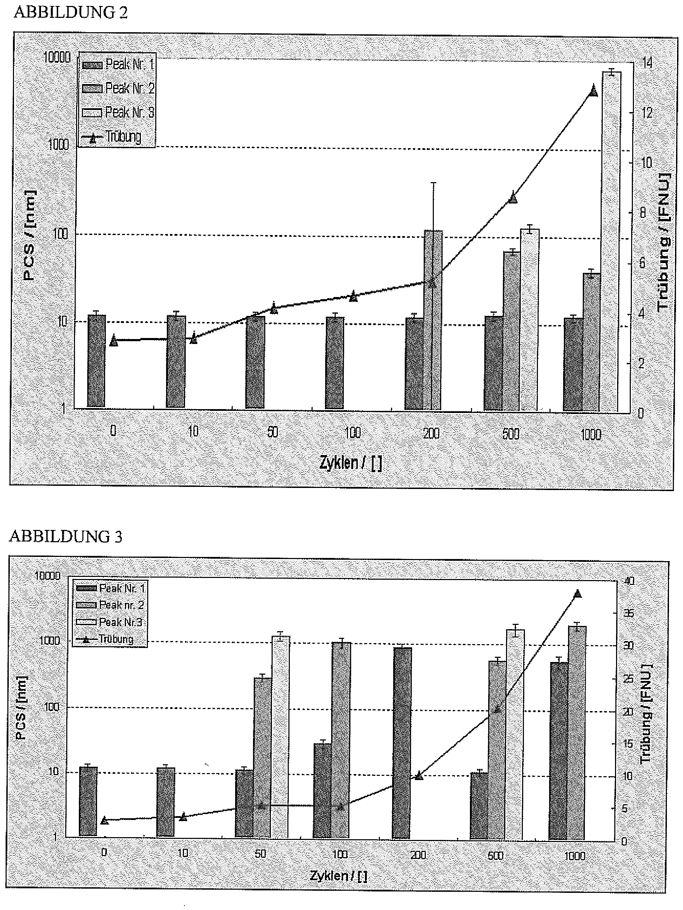

Die Abbildungen 2 und 3 beinhalten das Ergebnis der zwei Formulierungen bei einer konstant eingestellten Schergeschwindigkeit und bei unterschiedlichen Scherdauern (Anzahl der Zyklen). Die Kurven zeigen, dass mit zunehmender Scherbelastung aggregierte Teilchen (PCS-Messung) entstehen und die Opaleszenz (Trübung) der Lösung stark zunimmt. Die ursprüngliche Teilchengröße zu Beginn der Messung ist ca. 11 nm im Durchmesser.

### BEISPIEL 2:

Die Apparatur bestehend aus zwei Ganzglasspritzen, Kanülenrohr und mechanischem Aufbau für die Spritzenbewegung (Abbildung 1) wird für eine Proteinformulierungen eingesetzt, um die Abhängigkeit der Proteinaggregation/-Degradation von der auf die Proteine einwirkenden Scherstressstärke aufzuzeigen. Eine speziell entwickelte Software (Softwarecode: {81566AFO-A9CD-4EFD-A1E1-F07AF6DD2507}) ermöglicht die Einstellungen der Parameter Hub-Geschwindigkeit und Anzahl der Wiederholungen und erlaubt dadurch definierte Abläufe.

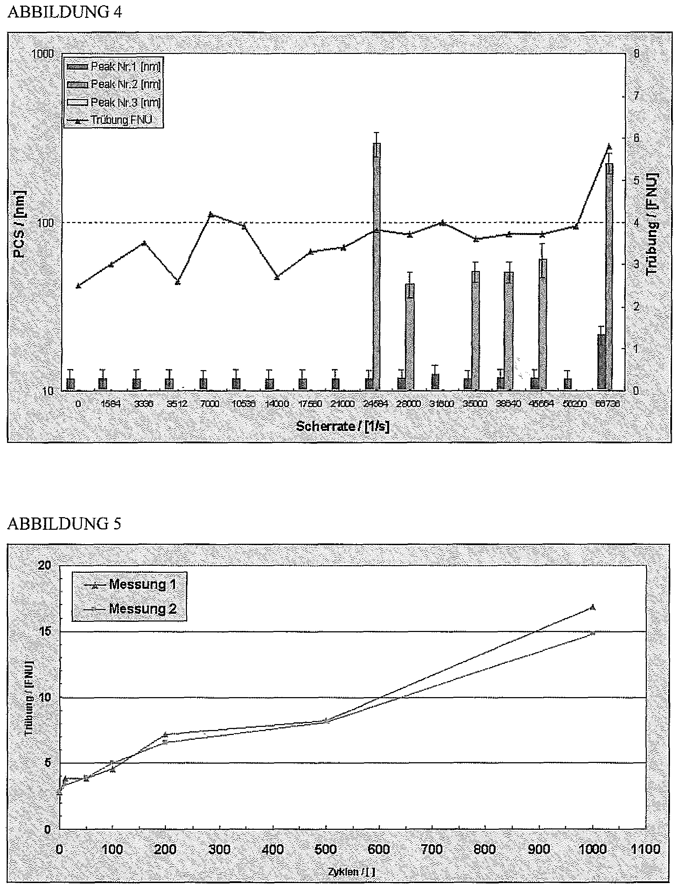

Aus Abbildung 4 ist zu erkennen, dass ein Schwellenwert der Scherstressstärke (Scherrate) überschritten werden muss, damit sich eine Veränderung der Proteingröße einstellt. Dieser Schwellenwert liegt bei diesem Experiment bei ca. 30 000 1/s. Wird nun dieser Schwellwert als Mindestwert für eine weiteres Experiment festgelegt, so kann durch die Reproduzierbarkeit von Messergebnissen die Funktionalität der Protein-Scherstress-Applikation nachgewiesen werden. Aus Abbildung 5 kann entnommen werden, dass bei fest eingestellter Schergeschwindigkeit (über den Schwellenwert) die Trübung einer Proteinlösung mit stetigem Erhöhen der Scherdauer für zwei unabhängige Messungen gleich stark zunimmt. Die Messergebnisse sind somit reproduzierbar.

### BEISPIEL 3:

Es werden Korrelationsversuche zur Simulation von Protein-Scherstress mittels der Protein-Scherstress-Applikation (PSA, gemäß Abbildung 1) durchgeführt.

Hierbei werden einerseits die Auswirkungen der Prozesskomponenten Silikonschlauch, Sterilfilter, Schlauchpumpe, Rotations-Kolben-Füller, Füllnadel und Aufpralleffekte, wie sie z. B. beim Befüllen von Behältnissen auftreten untersucht. Dies geschieht jeweils getrennt voneinander für zwei unterschiedliche, proteinhaltige Flüssigprodukte mittels trübungsphotometrische- und photonen-korrelations-spektroskopische Messungen sowie Messung der molekularen Größe der in Flüssigkeit befindlichen Teilchen durch die Analysemethode SDS-Page.

Weiterhin werden zwei unterschiedliche Proteine mit unterschiedlichen Formulierungen mittels der Scherstress-Applikation mit unterschiedlichen Niveaus gestresst. Hierbei werden Kurven/Messdaten aufgenommen (identische Analysen wie bei den Prozessversuchen Beispiel 1 und 2), die aus Scherraten von 100 bis ca. 160 000 1/s und einer Zyklenbreite von 1 bis ca. 100 resultieren. Die Ergebnisse aus den Versuchen Prozess und Applikation werden gegeneinander aufgetragen und korreliert um zum einen, die Parametrisierung für die Scherstress-Applikation festzulegen und zum anderen, den Scherstress zu quantifizieren (Kennzahl der Schergeschwindigkeit liefert das mathematische Modell der Scherstress-Applikation), der in der jeweiligen Prozesskomponente steckt.

Weiterhin werden pH-Versuche durchgeführt, um die Scherstressempfindlichkeit von Antikörpern zu bestimmen.

## Patentansprüche

1. Vorrichtung zur Ermittlung der Scherstressbelastung eines in Lösung dispergierten Teilchens, wobei das Teilchen im pharmazeutischen Bereich verwendet wird, durch Messung der Teilchenaggregation/Teilchenzestörung, bestehend aus mindestens folgenden Teilen:
a) einer mechanischen Aufnahme (F),
b) zwei komplementäre zylindrische Körper (C), die im Bereich ihres jeweiligen Auslasses konisch geformt sind,
c) wobei die Auslässe über eine Kanüle (D) verbunden sind,
d) zwei Kolbenstangen (B), passend in die Körper aus b), wobei jede Kolbenstange (B) eine Fingerauflage enthält,
e) zwei auf die Fingerauflagen der Kolbenstangen zugestellten Arretierungshalter (G), welche eine feste Positionierung der Kolbenstangen bewirken,
f) einem Antrieb (I), um die zylindrischen Körper auf- und abzubewegen, für ihre jeweilige Entleerung und Befüllung über die Kanüle,
g) eine digitale Antrieb-Ansteuerungseinheit (J),
wobei die besagte Vorrichtung **gekennzeichnet ist durch**
i) ein integriertes optisches Messsystem zur Messung der Teilchenaggregation/Teilchenzerstörung, wobei
ii) die zwei komplementären zylindrischen Körper (C) in b) Ganzglaskörper sind, und
iii) die Verbindung in c) über eine definierte Kanüle (D) mit Luer-Lock Anschlüssen (H) erfolgt,
wobei die Ganzglas-Körper und die Kanüle mit der mechanischen Aufnahme verbunden sind.

2. Vorrichtung gemäß Anspruch 1, wobei die Ganzglas-Körper aus b) mit einem Volumen von 2ml bis 20ml befüllt werden können.

3. Vorrichtung gemäß den Ansprüchen 1 bis 2, wobei die Ganzglas-Körper aus b) Spritzen sind.

4. Vorrichtung gemäß einem der Ansprüche 1 bis 3, wobei der Antrieb ein elektromechanischer Schrittmotor zur Auf-und Abbewegung der Ganzglas-Körper ist.

5. Vorrichtung gemäß den Ansprüchen 1 bis 4 dadurch charakterisiert, dass eine Software zur Steuerung der Parameter Hub-Geschwindigkeit und Anzahl der Wiederholungen installiert ist.

6. Vorrichtung gemäß einem der Ansprüche 1 bis 5, wobei der Kanüleninnendurchmesser 2mm, 1mm oder 0,6mm beträgt.

7. Verfahren zur Ermittlung der Scherstressbelastung eines in Lösung dispergierten Teilchens bei der Abfüllung der Lösung, wobei das Teilchen im pharmazeutischen Bereich verwendet wird, **gekennzeichnet durch** folgende Schritte:
a) Befüllen eines oder beider zylindrischer Ganzglas-Körper in der Vorrichtung gemäß den Ansprüchen 1 - 6 mit der besagten Lösung,
b) mehrmaliges Auf- und Abbewegen der Kolbenstangen aus Schritt a) über die Kanüle in der Vorrichtung gemäß den Ansprüchen 1 - 6,
c) Messung der Teilchenaggregation / Teilchenzerstörung.

8. Verfahren gemäß Anspruch 7 wobei als Verfahrensschritt c) eine analytische Quantifizierung der Teilchenaggregation/Teilchenzerstörung durchgeführt wird, z. B. durch Photon Correlation Spectroscopy (PCS) oder Trübungsmessungen.

9. Verfahren gemäß Anspruch 7 oder 8 wobei das in Lösung dispergierte Teilchen ein hochmolekularen Bestandteil ist.

10. Verfahren gemäß Anspruch 9 wobei der hochmolekularen Bestandteil ein Biomolekül wie beispielsweise ein Protein, Desoxyribonukleinsäure (DNA) oder Ribonukleinsäure (RNA) ist.

11. Verfahren gemäß Anspruch 10 wobei das genannte Protein ein Antikörper ist.

12. Verfahren gemäß den Ansprüchen 7 bis 11 wobei die Befüllung luftleer erfolgt.

13. Verfahren gemäß den Ansprüchen 7 bis 12 wobei die Scherstressbelastung bei der sterilen Abfüllung flüssiger pharmazeutischer Produkte in Gefäße ermittelt wird.

14. Verfahren gemäß den Ansprüchen 7 bis 11 wobei die zylindrischen Ganzglas-Körper teilweise mit Luft befüllt sind.

15. Verfahren gemäß Anspruch 14 wobei die Intensität der Schaumbildung von verschiedenen Lösungen gemessen wird als Parameter zum Vergleich der Schergeschwindigkeiten der jeweiligen Lösungen.

16. Verwendung einer Vorrichtung gemäß den Ansprüchen 1 bis 6 zur Bestimmung der mechanischen Belastbarkeit von molekularen Partikeln bei der biopharmazeutischen Abfüllung von Lösungen.

17. Verwendung gemäß Anspruch 16, wobei die Scherstressbelastung eines in Lösung dispergierten Teilchens in Abhängigkeit von der gemessenen Schaumbildung bzw. der angelegten Hub-Geschwindigkeit und Anzahl der Wiederholungen bestimmt wird.

18. Verwendung nach einem der Ansprüche 16 bis 17, wobei es sich bei dem Teilchen um einen gelösten hochmolekularen Bestandteil einer pharmazeutischen Zusammensetzung handelt.

## Claims

1. Apparatus for determining the shear stress load of a particle dispersed in a solution, wherein the particle is used in the pharmaceutical field, by measuring the particle aggregation/particle destruction, the apparatus consisting of at least the following components:
a) a mechanical container (F),
b) two complementary cylindrical bodies (C) which are conically shaped in the area of their respective outlet,
c) whereby the outlets are connected via a specific cannula (D)
d) two plungers (B), fitting into the bodies from b), each plunger (B) including a finger rest,
e) two locking holders (G) adjusted to the two finger rests of the plungers, with the locking holders causing a fixed positioning of the plungers,
f) a drive (I) for moving the cylindrical bodies up and down for their respective emptying and filling via the cannula,
g) a digital drive control unit (J), wherein said apparatus is **characterized by**
i) an integrated optical measuring system for measuring the particle aggregation/particle destruction, wherein
ii) the two complementary cylindrical bodies (C) in b) are wholly glass bodies, and
iii) the connection in c) is effected by a defined cannula (D) with Luer-Lock connections (H),
the wholly glass bodies and the cannula being connected to the mechanical container.

2. Apparatus according to Claim 1, wherein the wholly glass bodies from b) are fillable to a capacity of 2 ml to 20 ml.

3. Apparatus according to Claim 1 or 2, wherein the wholly glass bodies from b) are syringes.

4. Apparatus according to one of Claims 1 to 3, wherein the drive is an electromechanical stepping motor for moving the wholly glass bodies up and down.

5. Apparatus according to Claims 1 to 4, **characterised in that** software is installed for controlling the parameters of stroke speed and the number of repetitions.

6. Apparatus according to one of Claims 1 to 5, wherein the internal diameter of the cannula is 2 mm, 1 mm or 0.6 mm.

7. Method of determining the shear stress load of a particle dispersed in solution, during the filling of the solution, the particle being used in a pharmaceutical field, the method **characterised by** the following steps:
a) filling one or both cylindrical wholly glass bodies in the apparatus according to claims 1 to 6 with said solution,
b) moving the plungers from step a) repeatedly up and down over the cannula in the apparatus according to claims 1 to 6,
c) measuring the particle aggregation/particle destruction.

8. Method according to Claim 7, wherein an analytical quantification of the particle aggregation/particle destruction is carried out, for example by Photon Correlation Spectroscopy (PCS) or turbidity measurements, as step c).

9. Method according to Claim 7 or 8, wherein the particle dispersed in solution is a high-molecular component.

10. Method according to Claim 9, wherein the high-molecular component is a biomolecule such as, for example, a protein, deoxyribonucleic acid (DNA) or ribonucleic acid (RNA).

11. Method according to Claim 10, wherein the protein mentioned is an antibody.

12. Method according to Claims 7 to 11, wherein the filling is carried out without any air present.

13. Method according to Claims 7 to 12, wherein the shear stress load is measured during the sterile filling of liquid pharmaceutical products into vessels.

14. Method according to Claims 7 to 11, wherein the cylindrical wholly glass bodies are partly filled with air.

15. Method according to Claim 14, wherein the intensity of foaming of various solutions is measured as a parameter for comparing the shear velocities of the respective solutions.

16. Use of an apparatus according to Claims 1 to 6 for determining the mechanical loadability of molecular particles in the biopharmaceutical filling of solutions.

17. Use of an apparatus according to Claim 16, wherein the shear stress load on a particle dispersed in solution is determined as a function of the foam formation measured or the stroke speed applied and the number of repetitions.

18. Use according to one of claims 16 to 17, wherein the particle is a dissolved high-molecular component of a pharmaceutical composition.

## Revendications

1. Dispositif pour déterminer une contrainte de tension liée au cisaillement d'une particule dispersée en solution, dans lequel la particule est utilisée dans le domaine pharmaceutique, en mesurant l'agrégation de particules/la destruction de particules,
constitué d'au moins des parties suivantes :
a) un logement (F) mécanique,
b) deux corps (C) cylindriques complémentaires, qui sont formés de manière conique dans la zone de leur sortie respective,
c) dans lequel les sorties sont reliées par l'intermédiaire d'une canule (D),
d) deux tiges de piston (B), ajustées de manière à passer dans les corps issus de b), dans lequel chaque tige de piston (B) contient un appui pour doigt,
e) deux supports d'arrêt (G) rapprochés des appuis pour doigt des tiges de piston, lesquels entraînent un positionnement fixe des tiges de piston,
f) un entraînement (I) pour déplacer vers le haut et vers le bas les corps cylindriques, pour leur vidange et remplissage respectifs par l'intermédiaire de la canule,
g) une unité de pilotage-entraînement (J) numérique,
dans lequel ledit dispositif est **caractérisé par**
i) un système de mesure optique intégré pour mesurer l'agrégation de particules/la destruction de particules, dans lequel
ii) les deux corps (C) cylindriques complémentaires en b) sont des corps tout en verre, et
iii) la liaison en c) est effectuée par l'intermédiaire d'une canule (D) définie avec des embouts Luer-Lock (H),
dans lequel le corps tout en verre et la canule sont reliés au logement mécanique.

2. Dispositif selon la revendication 1, dans lequel les corps tout en verre issus de b) peuvent être remplis avec un volume de 2 ml à 20 ml.

3. Dispositif selon les revendications 1 à 2, dans lequel les corps tout en verre issus de b) sont des seringues.

4. Dispositif selon l'une quelconque des revendications 1 à 3, dans lequel l'entraînement est un moteur pas-à-pas électromécanique pour déplacer vers le haut et vers le bas les corps tout en verre.

5. Dispositif selon les revendications 1 à 4, **caractérisé en ce qu'**est installé un logiciel pour commander les paramètres de vitesse de course et de nombre de répétitions.

6. Dispositif selon l'une quelconque des revendications 1 à 5, dans lequel le diamètre intérieur de canule est de 2 mm, 1 mm ou 0,6 mm.

7. Procédé pour déterminer la contrainte de tension liée au cisaillement d'une particule dispersée en solution lors du transvasement de la solution, dans lequel la particule est utilisée dans le domaine pharmaceutique, **caractérisé par** des étapes suivantes :
a) de remplissage d'un ou des deux corps tout en verre cylindriques dans le dispositif selon les revendications 1 à 6 avec ladite solution,
b) de déplacement à plusieurs reprises vers le haut et vers le bas des tiges de piston de l'étape a) par l'intermédiaire de la canule dans le dispositif selon les revendications 1 à 6,
c) de mesure de l'agrégation de particules/de la destruction de particules.

8. Procédé selon la revendication 7, dans lequel une quantification analytique de l'agrégation de particules/de la destruction de particules est mise en œuvre en tant qu'étape de procédé c), par exemple par spectroscopie par corrélation de photons (Photon Correlation Spectroscopy - PCS) ou par des mesures de turbidité.

9. Procédé selon la revendication 7 ou 8, dans lequel la particule dispersée en solution est un constituant à poids moléculaire élevé.

10. Procédé selon la revendication 9, dans lequel le constituant à poids moléculaire élevé est une biomolécule, telle qu'une protéine, de l'acide désoxyribonucléique (ADN) ou de l'acide ribonucléique (ARN) .

11. Procédé selon la revendication 10, dans lequel ladite protéine est un anticorps.

12. Procédé selon les revendications 7 à 11, dans lequel le remplissage est effectué sans air.

13. Procédé selon les revendications 7 à 12, dans lequel la contrainte de tension liée au cisaillement est déterminée lors du transvasement stérile de produits pharmaceutiques liquides dans des récipients.

14. Procédé selon les revendications 7 à 11, dans lequel les corps tout en verre cylindriques sont remplis en partie d'air.

15. Procédé selon la revendication 14, dans lequel l'intensité de la formation de mousse de différentes solutions est mesurée en tant que paramètre pour la comparaison des vitesses de cisaillement des solutions respectives.

16. Utilisation d'un dispositif selon les revendications 1 à 6 pour définir la capacité de charge mécanique de particules moléculaires lors du transvasement biopharmaceutique de solutions.

17. Utilisation selon la revendication 16, dans laquelle la contrainte de tension liée au cisaillement d'une particule dispersée en solution est définie en fonction de la formation de mousse mesurée ou de la vitesse de levage appliquée et du nombre des répétitions.

18. Utilisation selon l'une quelconque des revendications 16 à 17, dans laquelle la particule est un constituant dissous à poids moléculaire élevé d'une composition pharmaceutique.
